Europäisches Patentamt

European Patent Office

Office européen des brevets

(19)

(11) Veröffentlichungsnummer: **0 278 387 B1**

# (12) EUROPÄISCHE PATENTSCHRIFT

(45) Veröffentlichungstag der Patentschrift: 24.04.91

(51) Int. Cl.⁵: **B60R 22/20**, B60R 22/24

(21) Anmeldenummer: 88101568.9

(22) Anmeldetag: 04.02.88

(54) **Höhenverstellvorrichtung für den Umlenkbeschlag eines Sicherheitsgurtes.**

(30) Priorität: 07.02.87 DE 8701882 U

(43) Veröffentlichungstag der Anmeldung:
17.08.88 Patentblatt 88/33

(45) Bekanntmachung des Hinweises auf die
Patenterteilung:
24.04.91 Patentblatt 91/17

(84) Benannte Vertragsstaaten:
DE ES FR GB IT SE

(56) Entgegenhaltungen:
DE-A- 3 019 298
DE-A- 3 146 918
DE-C- 3 214 712
GB-A- 2 180 138
US-A- 3 437 993

(73) Patentinhaber: AUTOFLUG GMBH & CO FAHR-
ZEUGTECHNIK
Industriestrasse 10
W-2084 Rellingen(DE)

(72) Erfinder: Kierzkowski, Jan
Hardauring 24,
W-2109 Hamburg 92(DE)

(74) Vertreter: Müller, Karl-Ernst, Dr. et al
Patentanwälte Becker & Müller Eisenhüttenstrasse 2
W-4030 Ratingen 1(DE)

EP 0 278 387 B1

## Beschreibung

Die Erfindung betrifft eine Vorrichtung zur Höhenverstellung des oberen Umlenk- oder Befestigungsbeschlages für den Schultergurt eines Sicherheitsgurtsystems insbesondere in Kraftfahrzeugen, mit einem Umlenkelement, welches an einem in einer an einem Fahrzeug-Aufbauteil (Karosserie) angebrachten Führungs- und Riegelschiene selbsttätig verstellbaren Läufer befestigt ist.

Eine erfindungsgemäße Vorrichtung ist aus der DE-A- 31 46 918 bekannt, bei welcher im Bereich des Umlenkbeschlages der Winkel zwischen dem Verlauf des zur angeschnallten Person abgehenden Gurtbandabschnittes und einer im Raum festgelegten gedachten Achse (Horizontale) gemessen und dieser Winkel anschließend mit einem als optimal vorgegebenen Winkel verglichen wird; ergibt dieser Vergleich eine Abweichung des tatsächlich ermittelten Winkels von dem als optimal zugeordnete Winkel, so wird eine Reaktion dahingehend ausgelöst, daß der Umlenkbeschlag über einen Antrieb seiner Höhenlage nach nach oben oder nach unten verfahren wird, je nachdem in welcher Richtung die Winkelabweichung festgestellt wurde.

Auch die weiterhin aus der DE-A- 33 42 203 bekannte Vorrichtung geht von diesem Meß- und Steuerprinzip aus, wobei zusätzlich aufgrund einer vorgegebenen Zeitfunktion die Höhenverstellung nur dann ausgelöst und vollzogen wird, wenn die Winkelabweichung über einen längeren als den eingestellten Zeitraum festgestellt wird, so daß nur bei einer länger dauernden Änderung der Sitzposition des angeschnallten Fahrzeuginsassen die Höhenlage des Umlenkbeschlages angepaßt wird.

Schließlich ist aus der DE-C- 32 14 712 eine entsprechende Vorrichtung bekannt, bei welcher der tatsächliche Verlauf des abgehenden Gurtbandabschnittes über die damit verbundene Verdrehung des Umlenkbeschlages mittels eines Drehpotentiometers bestimmt wird, das zwischen Umlenkbeschlag und dessen Drehgelenk angeordnet ist.

Mit den bekannten Vorschlägen ist der Nachteil verbunden, daß jeweils die Stellung des Gurtbandes oder des Umlenkbeschlages im freien Raum bestimmt und gemessen wird, wobei diese im Raum angeordnete Bezugsebene jeweils zu definieren ist, was den tatsächlich sich im praktischen Fahrbetrieb eines Kraftfahrzeuges einstellenden Verhältnissen nur unzureichend gerecht wird. Hinzu kommt der Nachteil, daß die mit der Ermittlung des tatsächlichen Gurtbandverlaufes verbundenen Meßvorrichtungen vergleichsweise aufwendig und störanfällig sind.

Der Erfindung liegt daher die Aufgabe zugrunde, eine Vorrichtung der eingangs genannten Gattung dahingehend zu verbessern, daß die Genauigkeit der Meßergebnisse vergrößert und die Bauweise der Meß- und Schaltvorrichtung vereinfacht wird.

Die Lösung dieser Aufgabe ergibt sich einschließlich vorteilhafter Ausgestaltungen und Weiterbildungen aus dem Inhalt der Patentansprüche.

Mit der Erfindung ist zunächst der Vorteil verbunden, daß nunmehr die tatsächliche Lage des Gurtbandes zu der Umlenkebene im Umlenkbeschlag gemessen und für die Bestimmung der Abweichung herangezogen wird, da dieser Parameter sich mit der Sitzposition und der Größe der angeschnallten Personen ändert und somit ein gutes Maß für die Bestimmung der Höhenlage des Umlenkbeschlages abgibt.

Nach einem ersten vorteilhaften Ausführungsbeispiel der Erfindung ist in dem vom Gurtband übergriffenen Steg des Umlenkelementes ein Meßfühler angeordnet, der aufgrund einer Federbelastung den Änderungen des Gurtbandverlaufes unmittelbar folgt und dabei einen nach verschiedenen Ausführungsbeispielen der Erfindung vorgesehenes, als Mikroschalter, als induktiver Näherungsschalter oder als kapazitiver Näherungsschaltung ausgebildetes Schaltelement betätigt, welches lediglich zwei Schaltzustände aufweist. Die Schaltzustände sind mit "ausgeschaltet" bzw. "eingeschaltet" zu definieren, wobei diesen Schaltstellungen die höhenmäßige Position des Umlenkelementes als "zu hoch" bzw. "zu niedrig" zugeordnet werden kann. Somit liefert der Schalter ständig ein Signal, welches von der Befehlselektronik für den Stellmotor der Höhenverstellvorrichtung entsprechend aufgenommen und umgesetzt wird.

Bei einem weiteren Ausführungsbeispiel der Erfindung ist im Umlenkelement ein fotoelektrischer Schalter eingebaut, mit einem Infrarotlichtsender und einem Infrarotlichtempfänger, die so zueinander angeordnet sind, daß das über den Schalter ablaufende Gurtband als Reflexionsfläche wirkt. Auch hieraus ergeben sich die beiden Schaltstellungen "reflektiert" und "nicht reflektiert", die für eine entsprechende Ansteuerung der Befehlselektronik verwendet werden.

In der Zeichnung sind zwei Ausführungsbeispiele der Erfindung wiedergegeben, welche nachstehend beschrieben sind. Es zeigen:

Fig. 1     eine Vorderansicht eines erfindungsgemäßen Umlenkelementes mit Gurtbandverlauf,

Fig. 2     einen Längsschnitt durch die Darstellung gemäß Figur 1,

Fig. 3     das Umlenkelement in einem weiteren Ausführungsbeispiel in einer geschnittenen Seitenansicht.

Ein Umlenkelement 10 einer Umlenkbeschlags ist mittels einer Bohrung 11 in einer nicht dargestellten Weise an einem in einer Führungs-und Riegelschiene geführten Läufer befestigt. Das Umlenkelement 10 weist einen Querschlitz 12 zur Hindurchführung eines Gurtbandes 13 auf, welches in dem Umlenkelement 10 von einem senkrechten Gurtabschnitt 14 in einen zum Körper der angeschnallten Person abgehenden Gurtbandab schnitt 15 umgelenkt wird. Der Querschlitz 12 bildet einen unteren Quersteg 16 als auflagernden Träger für das Gurtband 13 aus, in welchen die erfindungsgemäße Meß- und Schaltvorrichtung eingebaut ist und der eine horizontale Umlenkachse 17 festlegt.

In dem Quersteg 16 ist in einer Führung 18 senkrecht zur Umlenkachse 17 eine Schaltleiste 19 beweglich geführt, die über eine in der Führung 18 angeordnete Feder 20 nach außen gegen den Gurtbandabschnitt 15 vorgespannt gehalten ist. An ihrem oberen, nach außen aus dem Umlenkelement 10 hervortretenden Kopf ist die Schaltleiste 19 durch eine entsprechende Kontur der im Umlenkelement 10 gegebenen Wölbung des Gurtbandes angepaßt, so daß sich eine entsprechend große Unabhängigkeit des Schaltvorganges von den Durchlaufbewegungen des Gurtbandes durch den Querschlitz 12 ergibt.

Die linear in der Führung 18 bewegliche Schaltleiste 19 wirkt über einen Finger 21 auf ein Schaltelement 22, welches in dem gezeigten Ausführungsbeispiel als Mikroschalter ausgebildet ist. Das Schaltelement 22 weist nur zwei Schaltstellungen auf, nämlich "ausgeschaltet" und "eingeschaltet", und gibt somit ständig ein diesbezügliches Signal an eine nicht dargestellte Befehlselektronik für den Stellmotor der Höhenverstellvorrichtung ab. Aufgrund des so nur gegebenen einzigen Umschaltvorganges ist nur ein sehr geringer Schaltweg für das Schaltelement 22 erforderlich, da das genaue Maß der Bewegung der Schaltleiste für die Steuerung der Befehlselektronik nicht benötigt wird. Somit nimmt die Anordnung der Schaltleiste 19 entsprechend wenig Raum in Anspruch, und die Schaltleiste 19 ist auch ausreichend gegen eine Beschädigung von außen geschützt.

Wie hier nicht weiter dargestellt ist, kann die Schaltleiste 19 anstatt linear verschieblich in dem Quersteg 16 des Umlenkelementes 10 auch drehbar angeordnet sein und dabei in gleicher Weise auf ein entsprechend angeordnetes Schaltelement einwirken.

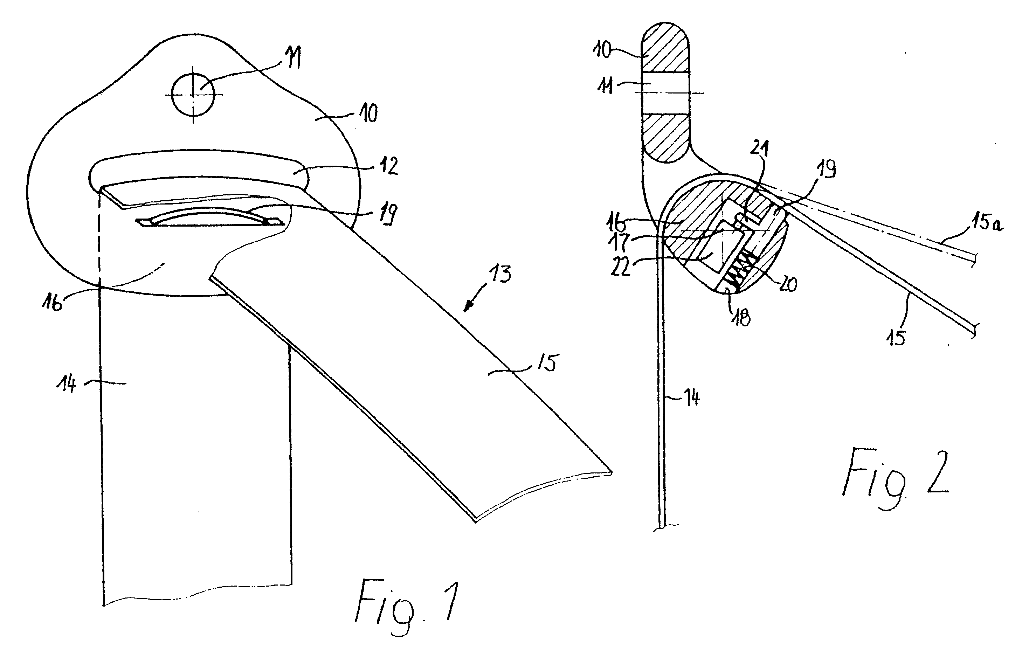

Aus der zuvor beschriebenen Anordnung der Bauteile läßt sich folgende Funktion der Vorrichtung ableiten: In der in Figur 2 mit durchgezogenen Linien gekennzeichneten Lage des Gurtbandabschnittes 15 ist die Schaltleiste 19 eingeschoben, wodurch deren Finger 21 auf dem Schaltelement 22 aufliegt und dieses - je nach der vorgenommenen Schalterbauart - entweder in einem ausgeschalteten oder in einem eingeschalteten Zustand hält; somit liefert das Schaltelement 22 ständig ein Informationssignal an die zugeordnete Steuerelektronik, beispielsweise betreffend eine zu niedrige Stellung des Umlenkelementes 10. Geht man nun von der Lage des Gurtbandes 15 entsprechend der gestrichelten Darstellung 15a aus, so wird in dieser Stellung der Finger 21 der Schaltleiste 19 vom Schaltelement 22 abgehoben, so daß das Schaltelement 22 die andere Schaltstellung einnimmt, welche beispielsweise eine zu hohe Lage des Umlenkelementes 10 definiert. Das Umschalten des Schaltelementes 22 von dem einen Zustand in den anderen wird als Erreichen eines optimalen Gurtwinkels interpretiert und einer bestimmten Lage der Schaltleiste zugeordnet. Die so ständig von dem Schaltelement abgegebenen Signale werden in der Befehlselektronik der Höhenverstellvorrichtung so verwertet, daß bei Andauern eines konstanten Signals über einen vorgegebenen Zeitraum, beispielsweise 10 Sekunden, hinaus von einer dauerhaft geänderten Sitzposition ausgegangen und der Umlenkbeschlag seiner Höhenlage nach entsprechend nachgestellt wird. Ändert sich der Schaltzustand des Schalters 22 innerhalb des vorgegebenen Zeitintervalls, erfolgt keine Nachstellung, da es sich dann nur um eine kurzfristige Bewegung des angeschnallten Fahrzeuginsassen handelt.

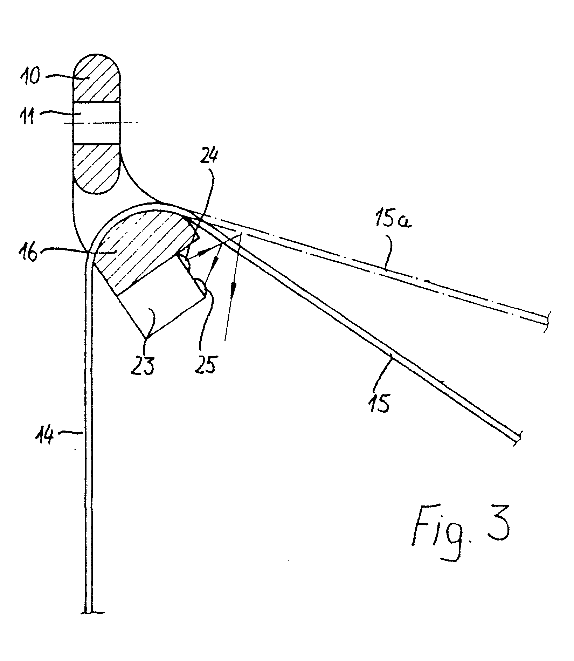

Bei dem in Figur 3 gezeigten Ausführungsbeispiel ist die mechanische Meß- und Schaltvorrichtung ersetzt durch einen fotoelektrischen Schalter 23 mit einem Infrarotlichtsender 24 und einem Infrarotlichtempfänger 25, welche so zueinander angeordnet sind, daß die Unterseite des über den Schalter 23 hinweggeführten Gurtbandabschnittes 15 als Reflexionsfläche dient. Auch bei diesem Ausführungsbeispiel sind bei dem Schalter 23 zwei Schaltzustände vorhanden, entsprechend welchen ständig Signale an die Befehlselektronik übermittelt werden. Bei der in ausgezogenen Linien dargestellten Lage des Gurtbandes 15 erfolgt eine Reflexion des vom Infrarotlichtsender 24 abgegebenen Strahles zum Infrarotlichtempfänger 25, was den einen Schaltzustand bestimmt; liegt hingegen der Gurtbandabschnitt 15 entsprechend der gestrichelt angedeuteten Anordnung zu weit vom Umlenkelement 10 entfernt, so wird der vom Sender 24 ausgehende Strahl zwar vom Gurtband 15 reflektiert, jedoch aufgrund der geänderten Winkelverhältnisse vom Empfänger 25 nicht aufgenommen, wodurch der zweite Schaltzustand definiert ist. Auch bei diesem Ausführungsbeispiel wird das Umschalten des Schalters 23 zwischen den beiden beschriebenen Schaltzuständen als Korrekturglied für die Nachstellung der Höhenlage des Umlenkbeschlages verwendet.

## Ansprüche

1. Vorrichtung zur Höhenverstellung des oberen Umlenk-oder Befestigungsbeschlages für den Schultergurt eines Sicherheitsgurtsystems insbesondere in Kraftfahrzeugen, mit einem Umlenkbeschlag, welcher an einem in einer an einem Fahrzeug-Aufbauteil (Karosserie) angebrachten Führungs- und Riegelschiene selbsttätig verstellbaren Läufer befestigt ist, dadurch gekennzeichnet, daß im Umlenkelement (10) des Umlenkbeschlages ein den Umlenkwinkel des Gurtbandes (15) am Umlenkelement (10) erfassende und die selbsttätige Verstellung des Umlenkbeschlages auslösende Meß- und Schaltvorrichtung (19, 22; 23, 24, 25) angeordnet ist.

2. Vorrichtung nach Anspruch 1, dadurch gekennzeichnet, daß die Meß- und Schaltvorrichtung (19, 22; 23, 24, 25) in dem vom Gurtband (14, 15) umschlungenen Quersteg (16) des Umlenkelementes (10) angeordnet ist.

3. Vorrichtung nach Anspruch 2, dadurch gekennzeichnet, daß in dem Quersteg (16) senkrecht zur Umlenkachse (17) des Umlenkelementes (10) eine gegen die Wirkung einer Feder (20) bewegliche Schaltleiste (19) angeordnet ist.

4. Vorrichtung nach Anspruch 3, dadurch gekennzeichnet, daß die Schaltleiste (19) in dem von dem zum Körper der angeschnallten Person abgehenden Gurtbandabschnitt (15) übergriffenen Teil des Quersteges (16) angeordnet und in ihrer Oberflächenkontur der Gurtwölbung angepaßt ist.

5. Vorrichtung nach einem der Ansprüche 2 - 4, dadurch gekennzeichnet, daß die Schaltleiste (19) bei ihrer der Lage des Gurtbandabschnitts (15) folgenden Bewegung auf ein in dem Umlenkelement (10) angeordnetes Schaltelement (22) wirkt.

6. Vorrichtung nach Anspruch 5, dadurch gekennzeichnet, daß das Schaltelement (22) zwei festgelegte Schaltzustände aufweist.

7. Vorrichtung nach Anspruch 6, dadurch gekennzeichnet, daß das Schaltelement (22) als Mikroschalter ausgebildet ist.

8. Vorrichtung nach Anspruch 6, dadurch gekennzeichnet, daß das Schaltelement (22) als induktiver Näherungsschalter ausgebildet ist.

9. Vorrichtung nach Anspruch 6, dadurch gekennzeichnet, daß das Schaltelement (22) als kapazitiver Näherungsschalter ausgebildet ist.

10. Vorrichtung nach einem der Ansprüche 5 - 9, dadurch gekennzeichnet, daß die Schaltleiste (19) in dem Quersteg (16) des Umlenkelementes (10) linear beweglich angeordnet ist.

11. Vorrichtung nach einem der Ansprüche 5 - 9, dadurch gekennzeichnet, daß die Schaltleiste (19) in dem Quersteg (16) des Umlenkelementes (10) drehbeweglich angeordnet ist.

12. Vorrichtung nach Anspruch 2, dadurch gekennzeichnet, daß in dem Quersteg (16) des Umlenkelementes (10) ein fotoelektrischer Schalter (23) mit einem Infrarotlichtsender (24) und einem Infrarotlichtempfänger (25) vorgesehen ist.

13. Vorrichtung nach Anspruch 12, dadurch gekennzeichnet, daß Sender (24) und Empfänger (25) so zueinander angeordnet sind, daß der Gurtbandabschnitt (15) als Reflexionsfläche wirkt.

14. Vorrichtung nach Anspruch 12 und 13, dadurch gekennzeichnet, daß der Schalter (23) zwei festgelegte Schaltstellungen aufweist.

**Claims**

1. Arrangement for adjusting the height of the upper deflecting or securing fitting for the shoulder strap of a safety belt system, in particular in motor vehicles, having a deflecting fitting which is secured to a traveller which is automatically adjustable in a guiding and locking rail provided on a vehicle mounting portion (body), characterised in that there is arranged in the deflecting element (10) of the deflecting fitting a measuring and switching arrangement (19, 22; 23, 24, 25) which detects the angle of deflection of the strap band (15) at the deflecting element (10) and initiates the automatic adjustment of the deflecting fitting.

2. Arrangement according to claim 1, characterised in that the measuring and switching arrangement (19, 22; 23, 24, 25) is arranged in the cross-bar (16) of the deflecting element (10) around which the strap band (14, 15) is wound.

3. Arrangement according to claim 2, characterised in that there is arranged in the cross-bar (16) perpendicular to the axis of deflection (17) of the deflecting element (10) a switching strip (19) which can be moved against the action of a spring (20).

4. Arrangement according to claim 3, characterised in that the switching strip (19) is arranged in the portion of the cross-bar (16) which is overlapped by the section of the strap band (15) going off to the body of the person who is strapped in and is adapted in terms of its surface contour to the curvature of the strap.

5. Arrangement according to one of the claims 2 to 4, characterised in that the switching strip (19), in the event of its movement following the position of the strap band section (15), acts on a switching element (22) which is arranged in the deflecting element (10).

6. Arrangement according to claim 5, characterised in that the switching element (22) has two fixed switching states.

7. Arrangement according to claim 6, characterised in that the switching element (22) is formed as a micro-switch.

8. Arrangement according to claim 6, characterised in that the switching element (22) is formed as an inductive proximity switch.

9. Arrangement according to claim 6, characterised in that the switching element (22) is formed as a capacitive proximity switch.

10. Arrangement according to one of the claims 5 to 9, characterised in that the switching strip (19) is arranged in the cross-bar (16) of the deflecting element (10) in a linearly moveable manner.

11. Arrangement according to one of the claims 5 to 9, characterised in that the switching strip (19) is arranged in the cross-bar (16) of the deflecting element (10) in a rotatably moveable manner.

12. Arrangement according to claim 2, characterised in that there is provided in the crossbar (16) of the deflecting element (10) a photoelectric switch (23) with an infrared light transmitter (24) and an infrared light receiver (25).

13. Arrangement according to claim 12, characterised in that transmitter (24) and receiver (25) are arranged in relation to each other such that the strap band section (15) acts as a reflecting surface.

14. Arrangement according to claim 12 and 13, characterised in that the switch (23) has two fixed switch positions.

**Revendications**

1. Dispositif de réglage en hauteur de la ferrure supérieure de renvoi ou de fixation de la ceinture d'épaule d'un ensemble de ceintures de sécurité, notamment de véhicules automobiles, comportant une ferrure de renvoi qui est fixée sur un curseur, déplaçable automatiquement dans un rail de guidage et de verrouillage, placé sur une carrosserie de véhicule automobile, caractérisé en ce qu'un dispositif de mesure et de manoeuvre (19, 22 23, 24, 25), enregistrant l'angle de renvoi de la sangle de ceinture (15) sur l'élément de renvoi (10) et déclenchant le déplacement automatique de la ferrure de renvoi, est disposé dans l'élément de renvoi (10) de la ferrure de renvoi.

2. Dispositif selon la revendication 1, caractérisé en ce que 1e dispositif de mesure et de manoeuvre (19, 22 23, 24, 25) est placé dans l'entretoise (16) de l'élément de renvoi (10), entourée par la sangle de ceinture (14, 15).

3. Dispositif selon la revendication 2, caractérisé en ce qu'une baguette de manoeuvre (19), mobile à l'encontre d'un ressort (20), est placée dans l'entretoise (16), perpendiculairement à l'axe de renvoi (17) de l'élément de renvoi (10).

4. Dispositif selon la revendication 3, caractérisé en ce que la baguette de manoeuvre (19) est placée dans la partie de l'entretoise (16) sur laquelle passe la portion de sangle (15) partant vers le corps de la personne attachée et est adaptée, dans son contour superficiel, à la courbure de la ceinture.

5. Dispositif selon l'une des revendications 2 à 4, caractérisé en ce que la baguette de manoeuvre (19) agit, dans son déplacement suivant la position de la portion de sangle (15), sur un élément de manoeuvre (22), placé dans l'élément de renvoi (10).

6. Dispositif selon la revendication 5, caractérisé en ce que l'élément de manoeuvre (22) comporte deux états de manoeuvre définis.

7. Dispositif selon la revendication 6, caractérisé en ce que l'élément de manoeuvre (22) est un micro-interrupteur.

8. Dispositif selon la revendication 6, caractérisé en ce que l'élément de manoeuvre (22) est un interrupteur de proximité inductif.

9. Dispositif selon la revendication 6, caractérisé en ce que l'élément de manoeuvre (22) est un interrupteur de proximité capacitif.

10. Dispositif selon l'une des revendications 5 à 9, caractérisé en ce que la baguette de manoeuvre (19) se déplace de façon linéaire dans l'entretoise (16) de l'élément de renvoi (10).

11. Dispositif selon l'une des revendications 5 à 9, caractérisé `n ce que la baguette de manoeuvre (l9) est mobile en rotation dans l'entretoise (16) de l'élément de renvoi (10).

12. Dispositif selon la revendication 2, caractérisé en ce qu'il est prévu un interrupteur photoélectrique (23) avec un émetteur à infrarouge (24) et un récepteur à infrarouge (25), dans 1'entretoise (16) de l'élément de renvoi (10).

13. Dispositif selon la revendication 12, caractérisé en ce que 1'émetteur (24) et le récepteur (25) sont disposés 1'un par rapport à l'autre, de manière que lu portion de sangle (15) serve de surface de réflexion.

14. Dispositif selon les revendications 12 et 13, caractérisé en ce que l'interrupteur (23) comporte deux positions de commande définies.

Fig. 1

Fig. 2

EP 0 278 387 B1

Fig. 3